Europäisches Patentamt

European Patent Office

Office européen des brevets

(19)

(11) Veröffentlichungsnummer: **0 013 950**
**A1**

(12) # EUROPÄISCHE PATENTANMELDUNG

(21) Anmeldenummer: 80100242.9

(51) Int. Cl.³: **F 16 D 3/60,** F 16 D 3/04

(22) Anmeldetag: 18.01.80

(30) Priorität: 26.01.79 DE 2902951

(71) Anmelder: **Chivari, Ilie, Berliner StraBe 1,
D-4690 Herne 2 (DE)**

(43) Veröffentlichungstag der Anmeldung: 06.08.80
**Patentblatt 80/16**

(72) Erfinder: **Chivari, Ilie, Berliner StraBe 1,
D-4690 Herne 2 (DE)**

(84) Benannte Vertragsstaaten: **AT BE CH DE FR GB IT LU
NL SE**

(74) Vertreter: **Wolgast, Rudolf, Dipl.-Chem. Dr. et al,
Bökenbusch 41 Postfach 11 03 86,
D-5620 Velbert 11 Langenberg (DE)**

(54) Kupplung zum winkeltreuen, einen Achsversatz zulassenden Kuppeln umlaufender Teile.

(57) An einer ersten Kupplungshälfte (10) ist bei (24) ein erstes Zwischenglied (22) schwenkbar angelenkt. Ein zweites Zwischenglied (34) ist an einer zweiten Kupplungshälfte (12) bei (36) schwenkbar angelenkt. Ein erster Doppellenker (38) ist über einen ersten Lenker (40) mit der ersten Kupplungshälfte (10) und über einen zweiten Lenker (42) mit der zweiten Kupplungshälfte (12) sowie über einen dritten Lenker (48) mit dem ersten Zwischenglied (22) und über einen vierten Lenker (50) mit dem zweiten Zwischenglied (34) verbunden. Ein zweiter Doppellenker (52) ist auf der gegenüberliegenden Seite angeordnet und über einen fünften Lenker (54) mit der ersten Kupplungshälfte (10) und über einen sechsten Lenker (56) mit der zweiten Kupplungshälfte (12) sowie über einen siebenten Lenker (62) mit dem ersten Zwischenglied (22) und über einen achten Lenker (64) mit dem zweiten Zwischenglied (34) verbunden.

## Kupplung zum winkeltreuen, einen Achsversatz zulassenden Kuppeln umlaufender Teile

Die Erfindung betrifft eine Kupplung zum winkeltreuen, einen Achsversatz zulassenden Kuppeln umlaufender Teile, enthaltend eine erste und eine zweite Kupplungshälfte, ein erstes und ein zweites Zwischenglied und Lenker, die mit den Kupplungshälften und den Zwischengliedern verbunden sind.

Bei einer bekannten Kupplung dieser Art (US-PS 4 040 270) sind Zwischenglieder in Form von Ringen vorgesehen, die konzentrisch aufeinander gelagert sind. Jeder Ring ist über einen ersten Lenker mit einer antriebsseitigen Kupplungshälfte und über einen zweiten Lenker mit einer abtriebsseitigen Kupplungshälfte verbunden. Die Kupplung gestattet eine winkeltreue Übertragung einer Drehbewegung zwischen umlaufenden Teilen, wobei bei einem Achsversatz die Lenker und die Ringe Ausgleichsbewegungen ausführen. Die Lenker führen dabei hin- und hergehende Schwenkbewegungen aus, während die Ringe gleichzeitig eine hin- und hergehende Drehbwegung relativ zueinander ausführen. Eine solche Kupplung gestattet eine kinematisch einwandfreie winkeltreue Übertragung von Drehbewegungen auch bei relativ großem Achsversatz.

Bei dieser bekannten Kupplung sind relativ große Lager erforderlich, da die Ringe aufeinander gelagert sind.

Es sind weiterhin Kupplungen bekannt, bei denen ein scheibenförmiges Zwischenglied über ein Parallellenkergetriebe bestehend aus drei gegeneinander um $120^{\circ}$ versetzten Lenkern mit einer antriebsseitigen Kupplungshälfte und über ein zweites Parallellenkergetriebe mit ebenfalls drei um $120^{\circ}$ gegeneinander versetzten Lenkern mit einer abtriebsseitigen Kupplungshälfte verbunden ist (DE-PS 1 233 667). Solche Kupplungen gestatten ebenfalls eine kinematisch einwandfreie Übertragung von Drehmomenten, allerdings nur dann, wenn ein Achsversatz zwischen den miteinander zu kuppelnden Wellen besteht.

Der Erfindung liegt die Aufgabe zugrunde, eine möglichst einfach aufgebaute Kupplung der eingangs definierten Art zu schaffen, bei welcher insbesondere nur Schwenklager mit relativ geringem Durchmesser erforderlich sind und welche auch bei fluchtenden Wellen eine einwandfreie Übertragung der Drehbewegung gewährleistet.

Erfindungsgemäß wird diese Aufgabe gelöst durch die Kombination der nachstehenden Merkmale:

(a) Das erste Zwischenglied ist an der ersten Kupplungshälfte außerhalb der Umlaufachse derselben um eine zu der Umlaufachse parallele Schwenkachse schwenkbar angelenkt.

4

0013950

(b) Das zweite Zwischenglied ist an der zweiten Kupplungshälfte außerhalb der Umlaufachse desselben und auf der der Schwenkachse des ersten Zwischengliedes gegenüberliegenden Seite um eine zu der Umlaufachse parallele Schwenkachse schwenkbar angelenkt.

(c) Ein erster Doppellenker ist auf der einen Seite der Schwenkachsen der Zwischenglieder angeordnet und über einen ersten Lenker mit der ersten Kupplungshälfte und über einen zweiten Lenker mit der zweiten Kupplungshälfte sowie über einen dritten Lenker mit dem ersten Zwischenglied und über einen vierten Lenker mit dem zweiten Zwischenglied verbunden.

(d) Ein zweiter Doppellenker ist auf der gegenüberliegenden Seite der Schwenkachsen der Zwischenglieder angeordnet und über einen fünften Lenker mit der ersten Kupplungshälfte und über einen sechsten Lenker mit der zweiten Kupplungshälfte sowie über einen siebten Lenker mit dem ersten Zwischenglied und über einen achten Lenker mit dem zweiten Zwischenglied verbunden.

Die erfindungsgemäße Kupplung ist mit Lenkern aufgebaut, die mit üblichen Schwenklagern aneinander bzw. an den Kupplungshälften und Zwischengliedern angelenkt sind. Es ergibt sich dabei eine preisgünstige Konstruktion mit geringen Abmessungen, was für viele Anwendungsfälle wesentlich ist.

Weitere Ausgestaltungen der Erfindung sind Gegenstand der Unteransprüche.

Die Erfindung ist nachstehend an einigen Ausführungsbeispielen unter Bezugnahme auf die zugehörigen Zeichnungen näher erläutert:

Fig. 1    zeigt eine Axialansicht einer Kupplung
          nach der Erfindung.

Fig. 2    zeigt einen Schnitt längs der Linie A-B
          von Fig. 1.

Fig. 3    zeigt eine Ansicht ähnlich Fig. 1 bei
          Wellenversatz.

Fig. 4    veranschaulicht in einer vereinfachten
          Darstellung die Wirkungsweise der
          Kupplung von Fig. 1 bei einem Wellenversatz in waagerechter Richtung in
          der Figur.

Fig. 5    veranschaulicht in einer Darstellung
          ähnlich Fig. 4 die Wirkungsweise der
          Kupplung von Fig. 1 bei einem Wellenversatz in senkrechter Richtung in der
          Figur.

Fig. 6    zeigt in einer vereinfachten Darstellung
          ähnlich Fig. 4 und 5 eine abgewandelte
          Ausführungsform der Kupplung.

Fig. 6A   zeigt in konstruktiver Darstellung ein
          Paar von Doppellenkern bei der Ausführungsform von Fig. 6 etwa in einem
          Schnitt längs der Linie C-D von Fig. 6.

Fig. 7    ist eine Darstellung ähnlich Fig. 4 und
          veranschaulicht die geometrischen Verhältnisse der Kupplung.

Fig. 8    zeigt in einer vereinfachten Darstellung
          eine weitere Ausführungsform der Kupplung bei fluchtenden Wellen.

Fig. 9    zeigt die Ausführungsform von Fig. 8
         bei  einem Wellenversatz.

Fig. 10   zeigt in Axialansicht eine Abwandlung der
         Kupplung von Fig. 1.

Fig. 11 bis 13 zeigen eine weitere Ausführungsform
         und  zwar einmal bei fluchtenden Achsen
         sowie bei "vertikalem" und "horizontalem"
         Achsversatz.

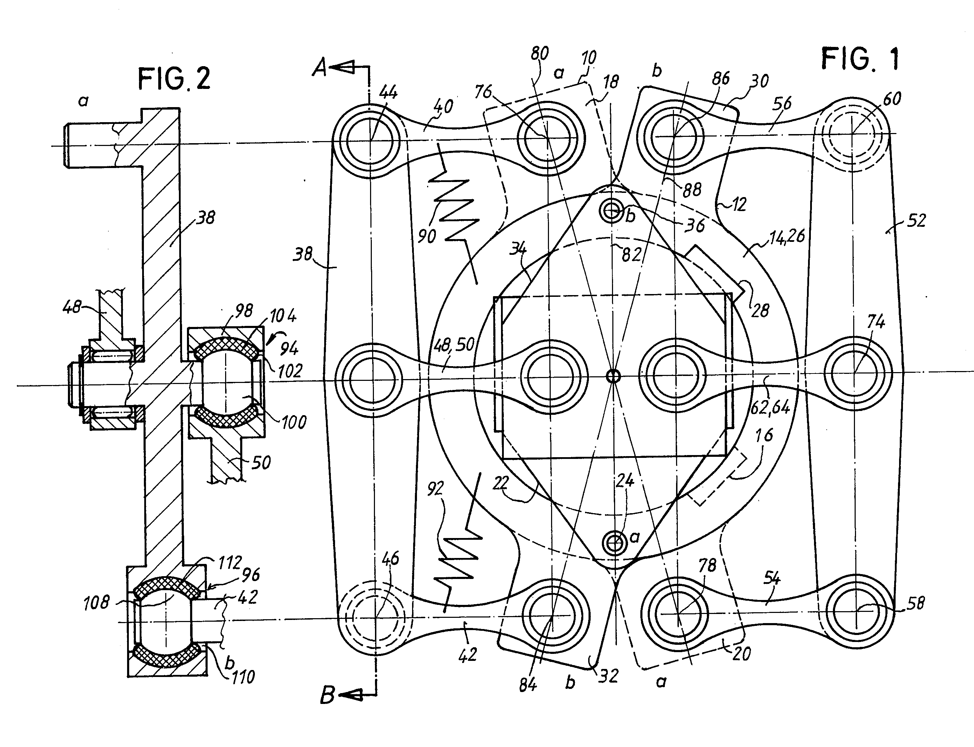

Die in Fig. 1 dargestellte Kupplung enthält eine erste
Kupplungshälfte 10 und eine zweite Kupplungshälfte 12.
In den Figuren sind Teile, die mit der Kupplungshälfte
10 verbunden oder an dieser angelenkt sind mit
a gekennzeichnet, während Teile, die mit der Kupplungshälfte 12 verbunden oder an dieser angelenkt sind,
mit b gekennzeichnet sind. Die Kupplungshälfte 10,
die in Fig. 1 hinten liegt und getrichtelt dargestellt
ist, enthält eine Nabe 14 mit einer Keilnut 16 und
diametral gegenüberliegende radiale Ansätze 18 und 20.
An der Kupplungshälfte 10 ist ein Zwischenglied 22 um
eine Schwenkachse 24 schwenkbar gelagert. Die in Fig. 1
vorn liegende Kupplungshälfte 12 weist einen Ring 26
mit einer Keilnut 28 und zwei diametral einander gegenüberliegende radiale Ansätze 30 und 32 auf. An der
zweiten Kupplungshälfte 12 ist ein zweites Zwischenglied
34 um eine Schwenkachse 36 schwenkbar gelagert.

Ein erster Doppellenker 38 ist über einen ersten
Lenker 40 mit dem Ansatz 18 der ersten Kupplungshälfte
10 und über einen zweiten Lenker 42 mit dem Ansatz 32
der zweiten Kupplungshälfte 12 verbunden. Der
Doppellenker ist ein langegestreckter Bauteil, an
dessen Enden die Lenker 40 und 42 um Schwenkachsen 44 bzw. 46 schwenkbar angelenkt sind.

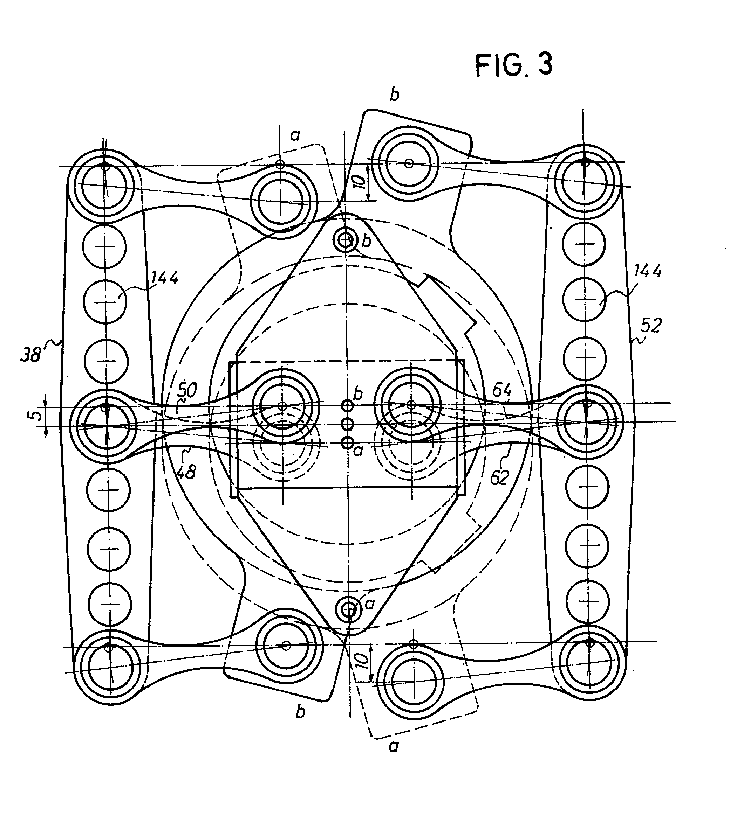

An dem Doppellenker 38 sind in der Mitte zwischen den Schwenkachsen 44 und 46 ein dritter und ein vierter Lenker 48,50 angelenkt, die in Fig. 1 übereinanderliegen aber in Fig. 3 erkennbar sind. Der dritte Lenker 48 ist mit dem ersten Zwischenglied 22 verbunden, welches an der ersten Kupplungshälfte 10 angelenkt ist. Der zweite Lenker 50 ist mit dem zweiten Zwischenglied 34 verbunden, welches an der zweiten Kupplungshälfte angelenkt ist.

Ein zweiter Doppellenker 52, der in gleicher Weise aufgebaut ist wie der Doppellenker 38, ist über einen fünften Lenker 54 mit dem Ansatz 20 der ersten Kupplungshälfte und über einen Lenker 56 mit dem Ansatz 30 der zweiten Kupplungshälfte verbunden. Die Lenker 54 und 56 sind dabei an den Enden des Doppellenkers 52 um Schwenkachsen 58 bzw. 60 schwenkbar angelenkt. In der Mitte zwischen den Schwenkachsen 58 und 60 sind ein siebenter und ein achter Lenker 62,64 angelenkt, die in Fig. 3 getrennt erkennbar sind. Der siebente Lenker 62 ist dabei mit dem Zwischenglied 22 verbunden, das an der ersten Kupplungshälfte 10 angelenkt ist, während der Lenker 64 mit dem zweiten Zwischenglied 34 verbunden ist, das an der zweiten Kupplungshälfte 12 angelenkt ist.

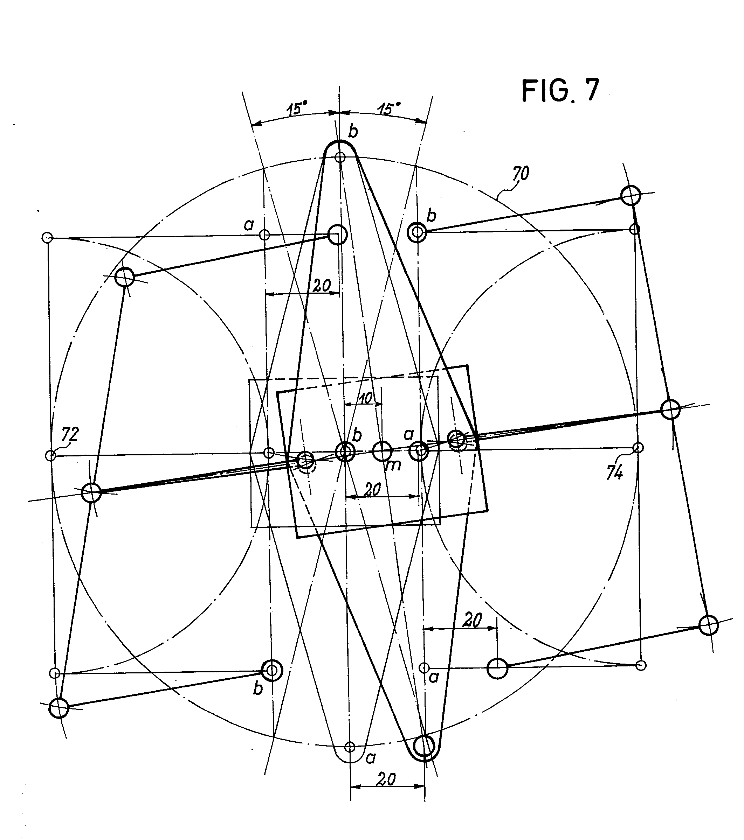

Bei fluchtenden Achsen 66,68, wie dies in Fig. 1 und - in dünnen Linien - in Fig. 7 dargestellt ist, sind die folgenden geometrischen Bedingungen erfüllt:

Die Schwenkachsen 24 und 36, um welche die Zwischenglieder 22 bzw. 34 an den Kupplungshälften 10 bzw. 12 angelenkt sind, liegen auf einem Zylinder 70 (Fig. 7) um die gemeinsamen Achsen 66,68 der Kupplungshälften 10 bzw. 12. Der dritte und der vierte Lenker 48,50 sind um eine gemeinsame, zwischen dem ersten und dem zweiten Lenker

8    0013950

40,42 liegende Schwenkachse 72 an dem ersten Doppellenker 38 angelenkt. In entsprechender Weise sind
der siebente und der achte Lenker 62,64 um eine gemeinsame,
zwischen dem fünften und dem sechsten Lenker 54 bzw. 56
liegende Schwenkachse 74 an dem zweiten Doppellenker 52
angelenkt. Die Schwenkachsen 72 und 74, um welche der
dritte und vierte bzw. der siebente und achte Lenker
48.50 bzw. 62,64 an dem ersten bzw. dem zweiten
Doppellenker 38,52 angelenkt sind, liegen ebenfalls auf
dem Zylinder 70. Die wirksamen Längen aller Lenker
40,42,48,50,54,56,62 und 64, d.h. die Abstände der
Schwenkachsen, um welche die Lenker an den verschiedenen
Bauteilen angelenkt sind, sind gleich. An den
Doppellenkern 38 und 52 sind der dritte und der vierte
Lenker 48,50 in der Mitte zwischen den mit den
Kupplungshälften 10,12 verbundenen Lenkern 40 und 42
und in Abständen von diesen Lenkern 40,42 angelenkt,
welche der besagten wirksamen Länge der Lenker 40,42 usw.
entspricht. In gleicher Weise sind der siebente und
achte Lenker 62,64 in der Mitte zwischen den mit
den Kupplungshälften 10,12 verbundenen Lenkern 54,56
und in Abständen von diesen Lenkern angelenkt, welche
ebenfalls der besagten wirksamen Länge der Lenker
entsprechen. In der dargestellten Ruhestellung bei
fluchtenden Achsen 66 und 68 liegen die Schwenkachsen
24 und 36 in einer die Achsen 66 und 68 enthaltenen
Ebene, und zwar auf entgegengesetzten Seiten der Achsen
66 und 68 und in gleichen Abständen von diesen. Die
Schwenkachsen 76 und 78, um welche der erste
Lenker 40 bzw. der fünfte Lenker 54 an der ersten
Kupplungshälfte 10 angelenkt sind, liegen in einer
Ebene 80, welche ebenfalls durch die Achsen 66 und 68
geht. Diese Ebene schließt mit der Ebene 82, welche die
Schwenkachsen 24 und 36 enthält, einen Winkel ein.
Die Schwenkachsen 84 und 86, um welche der zweite
Lenker 42 bzw. der  sechste Lenker 56 an der zweiten
Kupplungshälfte 12 angelenkt ist, liegen ebenfalls in
einer die Achsen 66 und 68 enthaltenden Ebene 88, welche symmetrisch zu der Ebene 80 in bezug auf die Ebene 82 liegt.

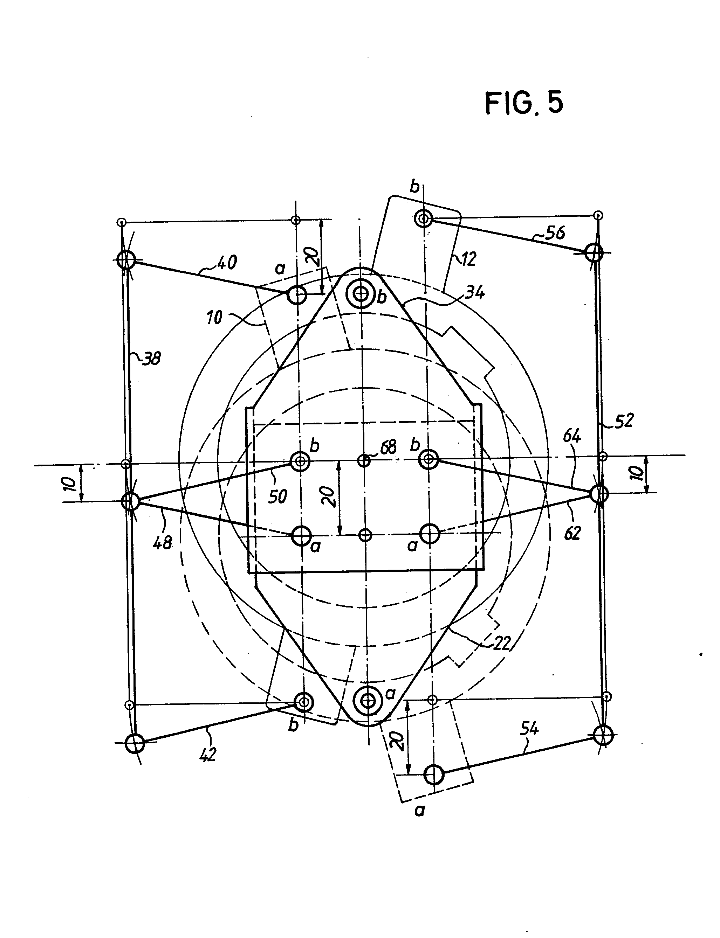

Fig. 3 zeigt die Kupplung von Fig. 1 bei einem Achsversatz in vertikaler Richtung in der Figur. Die Verhältnisse sind übersichtlicher aus der vereinfachten Darstellung von Fig. 5 erkennbar. In Fig. 5 sind in dünnen Linien die Lenker und Doppellenker bei der Ruhestellung der Kupplung dargestellt. In dick ausgezogenen Linien sind die Stellungen der Lenker bei dem vertikalen Achsversatz gezeigt. Man erkennt daraus, wie sich die Lenker und Doppellenker bei dem Achsversatz bewegt haben.

Es ist hier angenommen, daß die zweite Kupplungshälfte 12 stehengeblieben ist und die erste Kupplungshälfte 10 um einen Betrag von 20 mm nach unten bewegt wurde. Dabei bleibt also das Zwischenglied 34 in seiner ursprünglichen Stellung, während das Zwischenglied 22 unter Beibehaltung seiner Winkellage nach unten in Fig. 5 bewegt wird. Die Lenker 48 und 50 und die Lenker 62 und 64 gehen dabei scherenartig auseinander, da der Lenker 48 mit dem Zwischenglied 22 verbunden ist, während der Lenker 50 an dem Zwischengied 34 angelenkt ist. Der erste Lenker 40 wird im Uhrzeigersinn verschwenkt, da ihn die erste Kupplungshälfte 10 nach unten in Fig. 5 mitnimmt. Die Lenker 40 und 48, die beide mit der ersten Kupplungshälfte 10 in gleicher Weise nach unten mitgenommen und im Uhrzeigersinn verschwenkt werden, bilden dabei eine Art Parallelogrammführung für den Doppellenker 38. Der Doppellenker 38 wird dabei, wie aus Fig. 5 ersichtlich, näher an die Kupplungshälften 10,12 herangerückt. Der Doppellenker 38 ist jedoch über den zweiten Lenker 42 und den vierten Lenker 50 auch mit der ersten Kupplungshälfte 12 bzw. dem damit verbundenen Zwischenglied 34 verbunden. Die Schwenkbewegung der Lenker 40 und 48 mit der Parallelogrammführung des Doppellenkers

0013950

38 wird dadurch ermöglicht, daß der Doppellenker 38 gleichzeitig um den halben Winkelversatz, d.h. in Fig. 5 um 10 mm, nach unten verschoben wird, wobei auch die Lenker 42 und 50 verschwenkt werden.

Die Lenker 42 und 50 bilden ebenfalls eine Parallelogrammführung für den Doppellenker 38. Das ist möglich, da alle Lenker 40,48 und 42,50 die gleiche Länge haben.

Auf der in Fig. 5 rechten Seite wird bei der Abwärtsbewegung der ersten Kupplungshälfte 10 der fünfte Lenker 54 entgegen dem Uhrzeigersinn verschwenkt. Ebenso erfolgt eine Verschwenkung des siebenten Lenkers entgegen dem Uhrzeigersinn. Der Doppellenker 52 wird daher ebenfalls durch die beiden Lenker 54 und 62 parallelgeführt und näher an die Kupplungshälften 10,12 herangerückt. Die Verbindung des Doppellenkers 52 über den sechsten und achten Lenker 56 bzw. 64 mit der zweiten Kupplungshälfte 12 wird dadurch Rechnung getragen, daß der Doppellenker 54 um den halben Achsversatz unter Verschwenkung der Lenker 56 und 64 im Uhrzeigersinn nach unten bewegt wird.

Dieser Achsversatz wird somit ermöglicht durch eine Ausgleichsbewegung der Doppellenker 38 und 52 und der verschiedenen Lenker 40,42 usw.

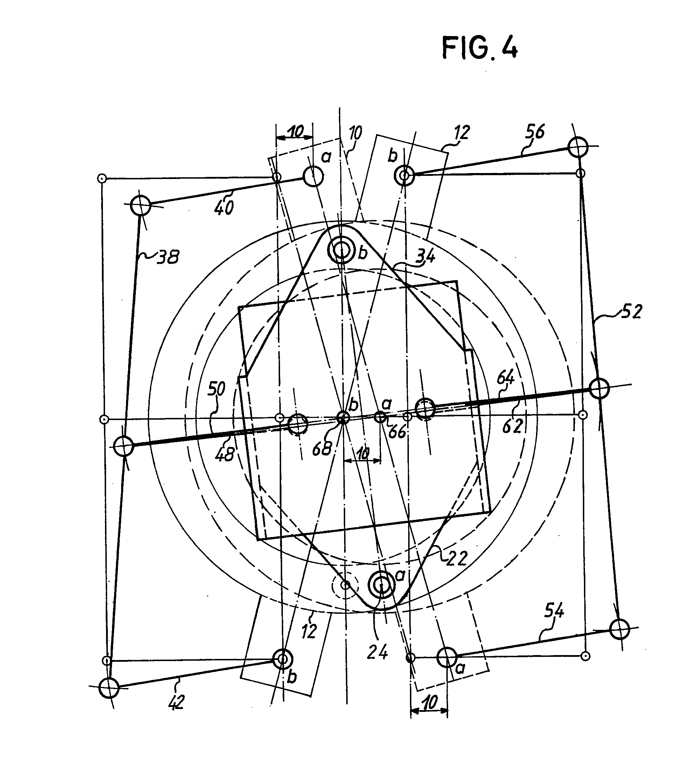

Fig. 4 zeigt in einer Darstellung ähnlich Fig. 5 die Verhältnisse bei einem Achsversatz in horizontaler Richtung in der Figur. Hier ist angenommen, daß die zweite Kupplungshälfte 12 mit ihrer Achse 68 feststehend geblieben ist, während die erste Kupplungshälfte 10 mit ihrer Achse 66 um 10 cm nach rechts in der Figur verlagert worden ist. Dieser Achsversatz wird im wesentlichen ausgeglichen durch eine Schwenkbewegung der Zwischenglieder 22 und 34 entgegen dem Uhrzeigersinn. Durch die nach rechts in Fig. 4 bewegte Kupplungshälfte 10 und das mit dieser bewegte Zwischenglied 22 wird der Doppellenker 38, der über den Lenker 42 an der feststehenden zweiten Kupplungshälfte 12 abgestützt ist, von dem mit der ersten Kupplungshälfte 10 verbundenen Lenker 40 im Uhrzeigersinn verschwenkt. Über die Lenker 48 und 50 erfolgt gleichzeitig eine Verschwenkung der Zwischenglieder 22 und 34.

In entsprechender Weise wird der über den Lenker 56 der zweiten Kupplungshälfte 12 abgestützte Doppellenker 52 durch den mit der ersten Kupplungshälfte 10 verbundenen Lenker 54 entgegen dem Uhrzeigersinn verschwenkt. Die Lenker 62 und 64 bewirken ebenfalls eine Verschwenkung der Zwischenglieder 22 und 34, und zwar wird das Zwischenglied 22, dessen Schwenkachse 24 mit der Kupplungshälfte 10 nach rechts bewegt wurde, durch den Lenker 62 abgestützt, so daß es sich gegenüber der Kupplungshälfte 10 entgegen dem Uhrzeigersinn verschwenkt, während das Zwischenglied 34 von dem Lenker 64 in eine Schräglage gezogen wird. Es ist erkennbar, daß auch bei einem solchen Achsversatz die Bewegungen aller Teile so aufeinander abgestimmt sind, daß die Ausgleichsbewegungen ohne Klemmungen stattfinden können. Bei einem Achsversatz, der schräg zu der durch die Figuren gegebenen Vertikalen und Horizontalen liegt, überlagern sich diese Ausgleichsbewegungen.

In der Praxis bestimmen die beiden Achsen 66 und 68 der Kupplungshälften eine Ebene, und die Kupplung rotiert relativ zu dieser Ebene, so daß die in Fig. 4 und Fig. 5 dargestellten Zustände der Kupplung einander abwechseln und dazwischen Überlagerungsformen dieser beiden Zustände auftreten.

Die beschriebene Kupplung zentriert sich selbst, solange über die Kupplung ein Drehmoment übertragen wird oder Fliehkräfte wirksam sind. Wenn das nicht der Fall ist, ist die Lage der Bauteile der Kupplung kinematisch unterbestimmt. Um auch in diesem Fall eine definierte Lage der Kupplungsteile zueinander sicherzustellen, können elastische Mittel zur elastischen Fesselung der Doppellenker 38,52 und Zwischenglieder 22,34 an eine Ruhelage vorgesehen sein. Fig. 1 und 2 zeigen verschiedene Möglichkeiten für solche elastischen Mittel. Auf der linken Seite von Fig. 1 sind die elastischen Mittel von Paaren von Zugfedern 90,92 gebildet, die sich zwischen dem ersten Lenker 40 und der ersten Kupplungshälfte 10, nämlich der Nabe 14, und zwischen dem zweiten Lenker 42 und der zweiten Kupplungshälfte 12, nämlich der Nabe 26 erstrecken. Bei dieser Lösung würden entsprechende Zugfedern sich auch zwischen dem fünften Lenker 54 und der ersten Kupplungshälfte 10 und dem sechsten Lenker 56 und der zweiten Kupplungshälfte 12 erstrecken.

Eine andere Lösung ist im rechten und unteren Teil von Fig. 2 dargestellt. Dort sind die Lenker 50 und 42 durch Torsionslager 94 bzw. 96 an dem Doppellenker 38 angelenkt. Bei dem Torsionslager 94 weist der Lenker 50 ein Lagerauge 98 auf. An dem Doppellenker 38 ist ein balliger Zapfen 100 vorgesehen. In dem Ringspalt 102 zwischen Lagerauge 98 und balligem Zapfen 100 sitzt ein ringförmiger Gummikörper 104, der mit beiden Teilen durch Vulkanisieren verbunden ist. Bei dem Torsionslager 96 weist der Doppellenker 38 ein Lagerauge 106 auf, während der Lenker 42 einen balligen Zapfenansatz 108 besitzt. Auch hier wird zwischen dem Lagerauge 106 und dem Zapfenansatz 108 ein Ringspalt 110 gebildet, in welchem ein mit den beiden Teilen durch Vulkanisieren verbundener ringförmiger Gummikörper 112 angeordnet ist.

In beiden Fällen sind die Lenker 42 bzw. 50 zwar zur Durchführung der Ausgleichsbewegung relativ zu dem Doppellenker 38 verschwenkbar. Sie sind jedoch elastisch an eine Ruhelage gefesselt. Die Kupplungsteile nehmen daher im Ruhezustand, d.h. wenn keine Drehbewegung übertragen wird, eine definierte Lage zueinander ein.

In der einen oder in der anderen Form würden dann sämtliche Schwenklager als Torsionslager ausgebildet werden.

Wie in Fig. 3 dargestellt ist, können die Doppellenker 38, 52 zur Verminderung der Fliehkräfte mit Durchbrüchen 114 versehen sein.

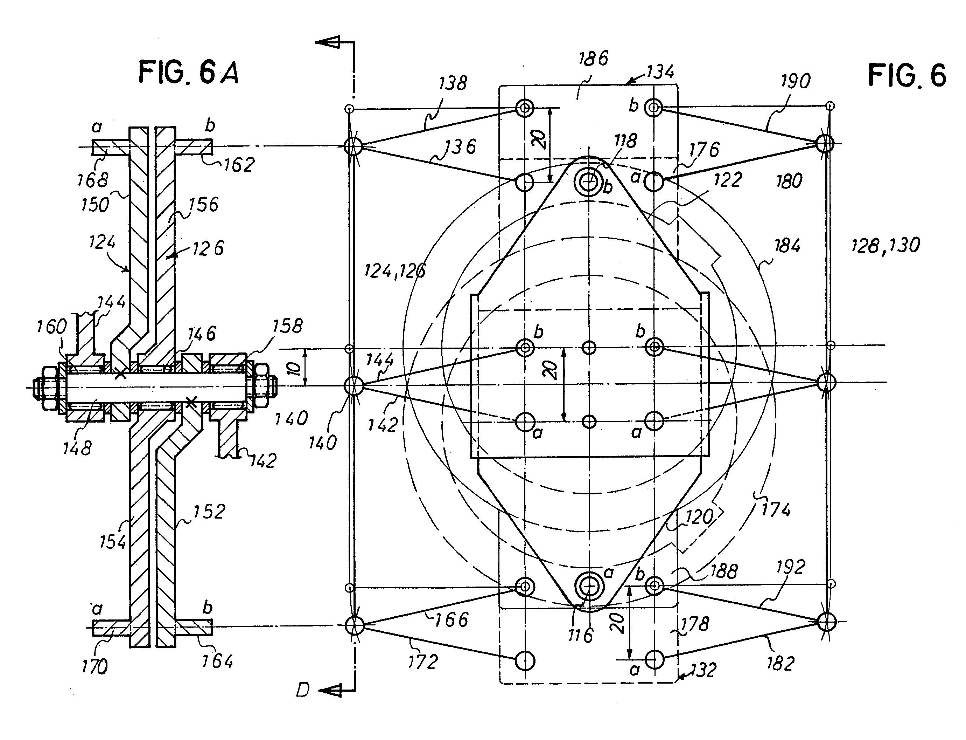

Bei der Ausführungsform nach Fig. 6 und 6a sind auf jeder Seite der Schwenkachsen 116,118 der Zwischenglieder 120 bzw. 122 zwei Doppellenker 124,126 bzw. 128,130 angeordnet, die jeder über Lenker mit der ersten und der zweiten Kupplungshälfte 132 bzw. 134 und dem ersten und dem zweiten Zwischenglied 120 bzw. 122 verbunden sind. An dem Ende, an welchem der eine der auf einer Seite angeordneten Doppellenker, z.B. 124, mit der einen Kupplungshälfte, z.B. 132 über einen Lenker 136 verbunden ist, ist der andere dieser Doppellenker, z.B. 126, mit der jeweils anderen Kupplungshälfte 134 über einen Lenker 138 verbunden. Die beiden auf einer Seite angeordneten Doppellenker 124,126 sind in der Mitte um eine Schwenkachse 140 drehbeweglich miteinander verbunden und über eine gemeinsames Paar von Lenkern 142,144, die um diese Schwenkachse 140 schwenkbar angelenkt sind, mit dem ersten und dem zweiten Zwischenglied 120 bzw. 122 verbunden. Wie aus Fig. 6A ersichtlich ist, ist der eine der beiden auf einer Seite angeordnete Doppellenker, nämlich der Doppellenker 126 mit einem Wälzlager 146 drehbar auf einer Achse 148 gelagert. Der andere Doppellenker 124 besteht aus zwei Hälften 150 und 152, die auf verschiedenen Seiten des ersteren Doppellenkers 126 angeordnet und mit der Achse 148 starr verbunden sind. Der Doppellenker 126 und die beiden Hälften 150,152 des Doppellenkers 124 sind so gekröpft, daß die Hälfte 150 etwa in der Ebene des gegenüberliegenden Armes 154 des Doppellenkers 126 und die Hälfte 152 des Doppellenkers 126 etwa in der Ebene des Armes 156 des Doppellenkers 126 liegt. Die beiden Lenker 142 und 144 des gemeinsamen Paares sind auf den beiden Enden der Achse 148 über Wälzlager 158 bzw. 160 gelagert. Die Doppellenker 124 und 126 weisen an ihren Enden auf den axial äußeren Seiten in der einen Axialrichtung Lagerzapfen 162,164 für Lenker 138,166 zum Anlenken an die eine Kupplungshälfte 134 und in der entgegengesetzten Axialrichtung Lagerzapfen 168,170 für Lenker 136,172 zum Anlenken an die andere Kupplungshälfte 132 auf.

Die Kupplungshälfte 132 enthält eine Nabe 174 mit diametral einander gegenüberliegenden breiten Ansätzen 176,178. An jedem dieser Ansätze ist ein Lenker 136 bzw. 172 angelenkt, der eine Verbindung zu je einem der Doppellenker 124 bzw. 126 herstellt. Weiterhin ist an jedem der Ansätze 176 und 178 ein Lenker 180 bzw. 182 angelenkt, der eine Verbindung zu jeweils einem der Doppellenker 128 und 130 herstellt. In ähnlicher Weise enthält die Kupplungshälfte 134 eine Nabe 184 mit diametral einander gegenüberliegenden breiten Ansätzen 186,188. An jedem der Ansätze 186,188 ist ein Lenker 138 bzw. 166 angelenkt, der eine Verbindung zu einem der Doppellenker 124,126 herstellt. Weiterhin ist an jedem der Ansätze 186 und 188 ein Lenker 190 bzw. 192 angelenkt, der eine Verbindung zu einem der Doppellenker 128,130 herstellt.

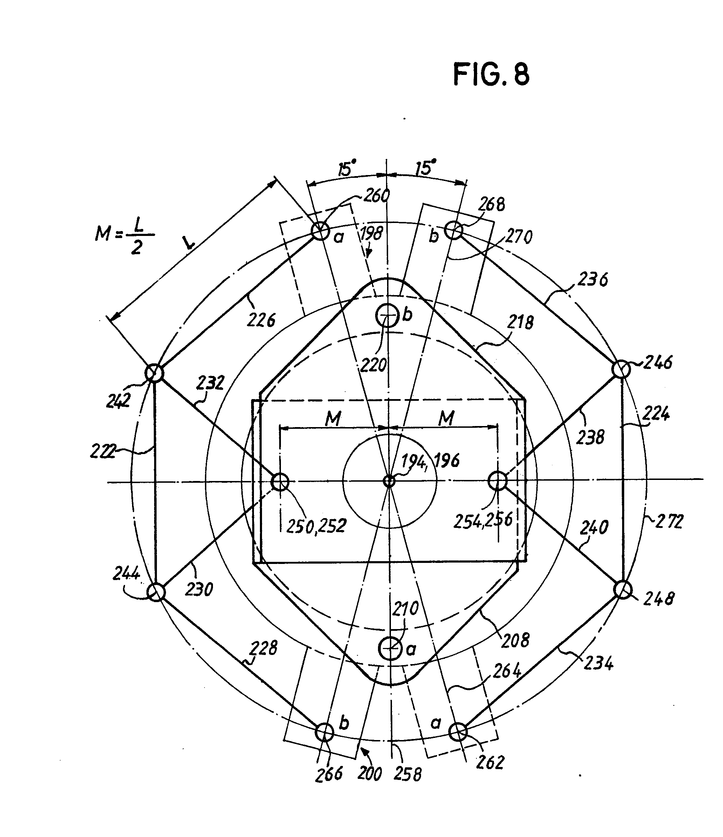

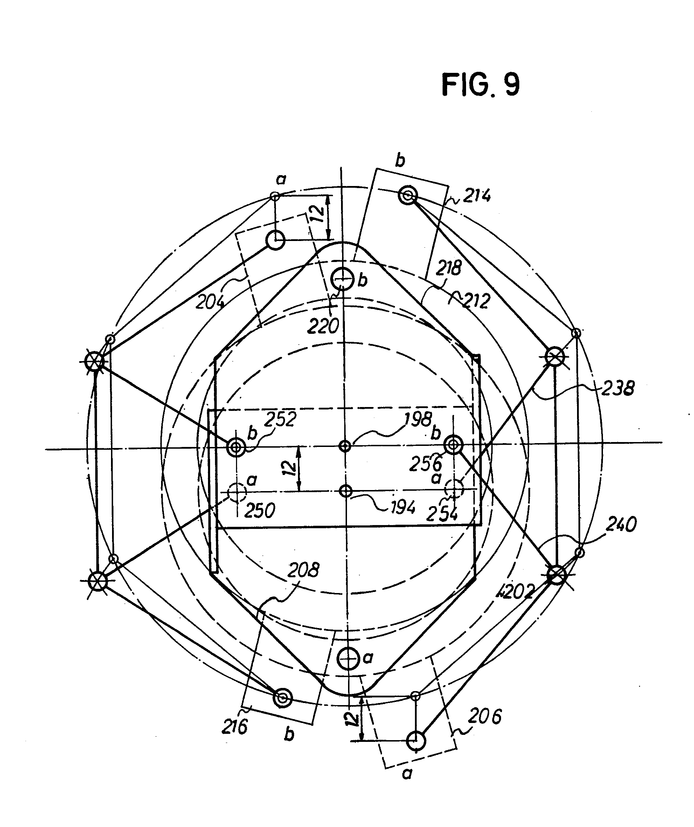

Ein weiteres Ausführungsbeispiel der Erfindung ist in den Figuren 8 und 9 dargestellt, wobei Fig. 8 die Kupplung in der Ruhestellung bei fluchtenden Achsen

0013950

194,196 und Fig. 9 die Kupplung bei einem Achsversatz zeigt.

Die Kupplung nach Fig. 8 und 9 enthält eine erste Kupplungshälfte 198 mit der Achse 194 und eine zweite Kupplungshälfte 200 mit einer Achse 196. Die erste Kupplungshälfte 198 enthält einen Ring 202 mit zwei diametral in bezug auf die Achse 194 einander gegenüberliegenden Ansätze 204,206. An der ersten Kupplungshälfte 198 ist ein Zwischenglied 208 um eine Schwenkachse 210 schwenkbar angelenkt.

Die zweite Kupplungshälfte 200 enthält einen Ring 212 mit zwei in bezug auf die Achse 196 diametral einandergegenüberliegenden radialen Ansätzen 214,216. An der zweiten Kupplungshälfte 200 ist ein Zwischenglied 218 um eine Schwenkachse 220 schwenkbar anglenkt.

Die Kupplung enthält zwei Doppellenker 222 und 224. Der Doppellenker 222 ist über einen ersten Lenker 226 mit der ersten Kupplungshälfte 198 und über einen zweiten Lenker 228 mit der zweiten Kupplungshälfte 200 verbunden. Weiterhin ist der Doppellenker 222 über einen dritten Lenker 230 mit dem ersten Zwischenglied 208 und über einen Lenker 232 mit dem zweiten Zwischenglied 218 verbunden. Der Doppellenker 224 ist über einen fünften Lenker 234 mit der ersten Kupplungshälfte 198 und über einen sechsten Lenker 236 mit der zweiten Kupplungshälfte 200 verbunden. Weiterhin ist der Doppellenker 224 über einen siebenten Lenker 238 mit dem ersten Zwischenglied 208 und über einen Lenker 240 mit dem zweiten Zwischenglied 218 verbunden.

Bei der Ausführungsform nach Fig. 8 und 9 sind der dritte und der vierte Lenker 230 und 232 um die gleichen Schwenkachsen 242 und 244 an dem ersten Doppellenker 222 angelenkt wie der zweite bzw. der erste Lenker 228 bzw. 226. In gleicher Weise sind der siebente und der achte Lenker 238 bzw. 240 an dem zweiten Doppellenker 224 um die gleichen Schwenkachsen 246 bzw. 248 angelenkt wie der sechste bzw. der fünfte Lenker 236 bzw. 234.

Die wirksamen Längen des ersten, des zweiten, des fünften und des sechsten Lenkers sind gleich und sind gleich dem Abstand der Schwenkachsen 142,144 bzw. 146,148 an den Doppellenkern 222 bzw. 224.

Bei fluchtenden Achsen 194,196 der beiden Kupplungshälften 198 und 200, wie sie in Fig. 8 dargestellt ist, ergeben sich die folgenden geometrischen Verhältnisse:

Die Schwenkachsen 250,252 bzw. 254,256, um welche der dritte und der vierte Lenker 230,232 an dem ersten bzw. zweiten Zwischenglied 208 bzw. 218 angelenkt sind, fallen zusammen. Ebenso fallen die Schwenkachsen 254,256 zusammen, um welche der siebente und der achte Lenker 238 bzw. 240 an dem ersten bzw. dem zweiten Zwischenglied 208 bzw. 218 angelenkt sind. Die besagten zusammenfallenden Schwenkachsen 250,252 und 254,256 des dritten und vierten bzw. des siebenten und des achten Lenkers 230,232 bzw. 238,240 liegen symmetrisch zu einer ersten Ebene 258, die durch die fluchtenden Achsen 194,196 der Kupplungshälften 198,200 und die diametral und symmetrisch dazu einander gegenüberliegenden Schwenkachsen 210,220 der Zwischenglieder 208,218 geht. Der Abstand M der ersteren Schwenkachsen 250,252 und 254,256 von dieser Ebene 258 ist halb so groß wie die Längen L des ersten, des zweiten, des dritten und des vierten Lenkers 226,228,234 bzw. 236. Die Schwenkachsen 260 und 262, um welche der erste Lenker 226 bzw. der fünfte Lenker 234 an der ersten Kupplungshälfte 198 angelenkt sind, liegen in einer die fluchtenden Achsen 194,196 der beiden Kupplungshälften 198,200 enthaltenden zweiten Ebene 264. Die Schwenkachsen 266,268, um welche der zweite Lenker 228 und der sechste Lenker 236 an der zweiten Kupplungshälfte 200 angelenkt ist liegen in einer dritten, durch die fluchtenden Achsen 194,196 der beiden Kupplungshälften 198,200 gehenden Ebene 270. Die zweite und die dritte Ebene 264 bzw. 270 liegen symmetrisch zueinander im Bezug auf die erste Ebene 258 und schließen einen Winkel von 30$^{\circ}$ ein, d.h. sie bilden mit der Ebene 258 jeweils einen Winkel von 15$^{\circ}$. Die Schwenkachsen 242,244, 246,248,260,262,266 und 268 liegen alle auf einem gemeinsamen, um die zusammenfallenden Achsen 294,296 verlaufenden Zylinder 272.

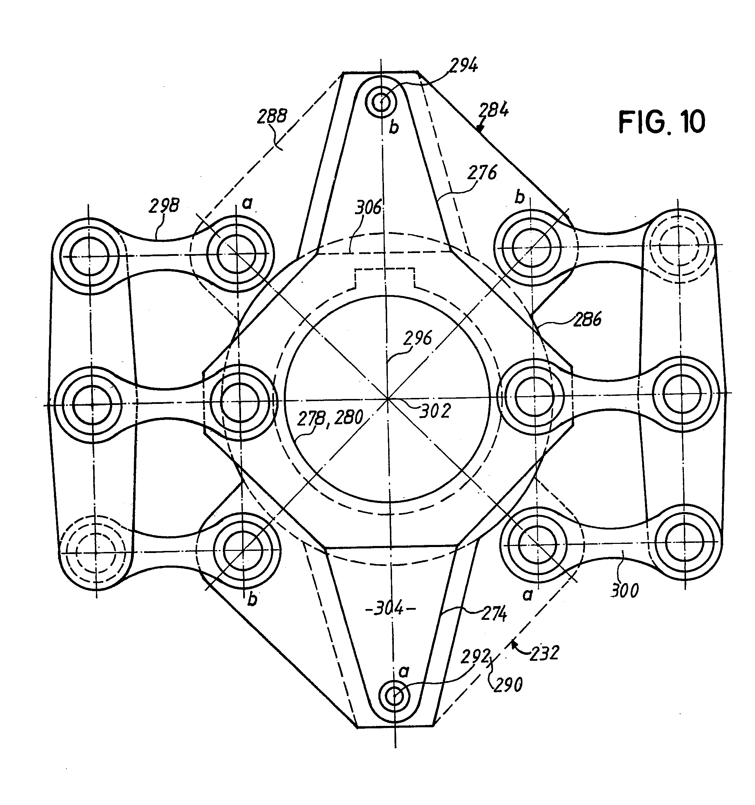

Fig. 10 zeigt eine Abwandlung der Ausführungsform nach Fig. 1, die dadurch gekennzeichnet ist, daß die Zwischenglieder 274 und 276 mit zentralen Durchbrüchen 278,280 versehen sind.

Die Ausführungsform nach Fig. 10 enthält eine erste Kupplungshälfte 282 und eine zweite Kupplungshälfte 284. Die erste Kupplungshälfte 282 besteht aus einer Nabe 286 und diametral einander gegenüberliegenden Ansätzen 288,290. Die Ansätze 288,290 sind unsymmetrisch in Bezug auf die durch die Schwenkachsen 292,294 der Zwischenglieder 274,276 gehenden Ebene 296 ausgebildet und nur nach einer Seite ausladend, wo der erste bzw. der fünfte Lenkr 298 bzw. 300 angelenkt ist. Die Ansätze 288 und 290 sind jedoch zentralsymmetrisch in bezug auf die Achse 302 der Kupplungshälfte 282. Das Zwischenglied 274 enthält einen dreieckigen Teil 304 und einen ringartigen Teil 306 mit polygonalem Umfang, welcher den zentralen Durchbruch 278 um die Achse 302 herum aufweist. In entsprechender Weise ist die Kupplungshälfte 284 mit dem Zwischenglied 276 ausgebildet. Die Doppellenker und die Lenker entsprechen in ihrer Anordnung und Geometrie der von Fig. 1 und sind daher nicht mehr im einzelnen beschrieben.

Die Kupplung kann in verschiedener Weise abgewandelt werden. Beispielsweise können die in Fig. 3 dargestellten Durchbrüche 114 auch bei anderen Ausführungsformen zu dem gleichen Zweck vorgesehen werden. Auch die zentralen Durchbrüche 278,280 der Ausführungsform von Fig. 10 können bei anderen Ausführungsformen vorgesehen sein. Bei allen Ausführungsformen können elastische Mittel vorgesehen sein, welche die einzelnen Teile der Kupplung elastisch an bestimmte relative Lagen zueinander fesseln.

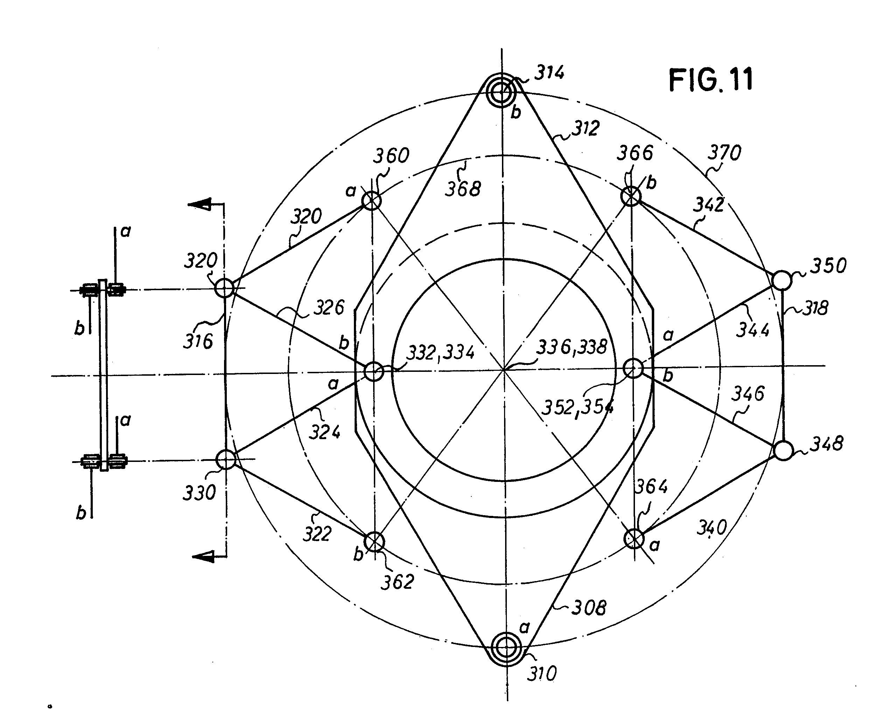

Bei der Ausführungsform nach Fig. 11 bis 13 ist mit 308 ein Zwischenglied bezeichnet, welches um eine Achse 310 schwenkbar an einer (nicht dargestellten) ersten Kupplungshälfte angelenkt ist. Ein zweites Zwischenglied 312 ist um eine Achse 314 schwenkbar an einer (nicht dargestellten) zweiten Kupplungshälfte angelenkt. Die Verbindung zwischen erster und zweiter Kupplungshälfte erfolgt über einen ersten Doppellenker 316 und einen zweiten Doppellenker 318. Der erste Doppellenker 316 ist über einen ersten Lenker 320 mit der ersten Kupplungshälfte und über einen zweiten Lenker 322 mit der zweiten Kupplungshälfte verbunden. Weiterhin ist der Doppellenker 316 über einen dritten Lenker 324 mit dem ersten Zwischenglied 308 und über einen vierten Lenker 326 mit dem zweiten Zwischenglied 312 verbunden. Dabei sind der erste und der vierte Lenker 320 bzw. 326 um eine gemeinsame Achse 328 schwenkbar an dem einen Ende des Doppellenkers 316 angelenkt. Der zweite und der dritte Lenker 322 bzw. 324 sind an dem anderen Ende des Doppellenkers 316 um eine gemeinsame Achse 330 schwenkbar angelenkt. Der dritte Lenker 324 ist um eine Schwenkachse 332 schwenkbar an dem ersten Zwischenglied 308 angelenkt, während der vierte Lenker 326 um eine Schwenkachse 334 schwenkbar an dem zweiten Zwischenglied 312 angelenkt ist. Wenn die Achsen 336 bzw. 338 der beiden Kupplungshälften fluchten, wie daß in Fig. 11 dargestellt ist, fallen die Schwenkachsen 332 und 334 zusammen.

In ähnlicher Weise ist der Doppellenker 318 über einen fünften Lenker 340 mit der ersten Kupplungshälfte und über einen sechsten Lenker 342 mit der zweiten Kupplungshälfte verbunden. Weiterhin ist der Doppellenker 318 über einen siebenten Lenker 344 mit dem ersten Zwischenglied 308 und über einen achten Lenker 346 mit dem zweiten Zwischenglied 312 verbunden. Auch hier sind der fünfte Lenker 340 und der achte Lenker 346 um eine gemeinsame Schwenkachse 348 an dem einen Ende des Doppellenkers 318 angelenkt, während der sechste Lenker 342 und der siebeten Lenker 344 um eine gemeinsame Schwenkachse 350 am anderen Ende des Doppellenkers 318 angelenkt sind. Die Achsen 352, um welche der Lenker 346 an dem ersten Zwischenglied 308 angelenkt ist, und die Schwenkachse 354, um welche der achte Lenker 346 an dem zweiten Zwischenglied 312 angelenkt ist, fallen bei fluchtenden Achsen 336,338 der Kupplungshälften zusammen.

Die beiden Zwischenglieder 308 und 312 weisen zentrale Durchbrüche 356 bzw. 358 auf.

Die geometrischen Beziehungen bei fluchtenden Achsen 336 und 338 der Kupplungshälften sind bei dieser Ausführungsform wie folgt:

Die effektive Länge der Doppellenker 316 und 318, d.h. der Abstand der Schwenkachsen 328,330 bzw. 348,350 voneinander, ist gleich der Länge der Lenker 320,322, 324,326,340,342,344 und 346. Die Schwenkachse 360, um welche der erste Lenker 320 an der ersten Kupplungshälfte angelenkt ist, ist von der Schwenkachse 332, um welche der dritte Lenker 324 an dem ersten Zwischenglied 308 angelenkt ist, in einem der Länge jedes der Lenker 320 usw. entsprechenden Abstand angeordnet. In gleicher Weise liegt die Schwenkachse 362,

0013950

um welche der zweite Lenker 322 an der zweiten Kupplungshälfte angelenkt ist in einem Abstand von der Schwenkachse 334, um welche der vierte Lenker 326 an dem zweiten Zwischenglied 312 angelenkt ist, der ebenfalls gleich der Länge jedes der Lenker 320, 326 usw. ist. Die Lenker, der Doppellenker und die Verbindungslinien der letztgenannten Schwenkachsen bilden somit drei gleichseitige Dreiecke. In ähnlicher Weise ist die Bemessung und Anordnung des Doppellenker 318 mit den Lenkern 340,342,344 und 346. Die Schwenkachsen 360,362 und die entsprechenden Schwenkachsen 364 und 366 auf der anderen Seite liegen auf einem gemeinsamen Zylinder 368 um die fluchtenden Achsen 336,338 der Kupplungshälften. Die Doppellenker 316 und 318 liegen diametral einander gegenüber und tangential zu einem Kreis 370, der durch die Schenkachsen 310 und 314 der Kupplungshälften 308 bzw. 312 geht.

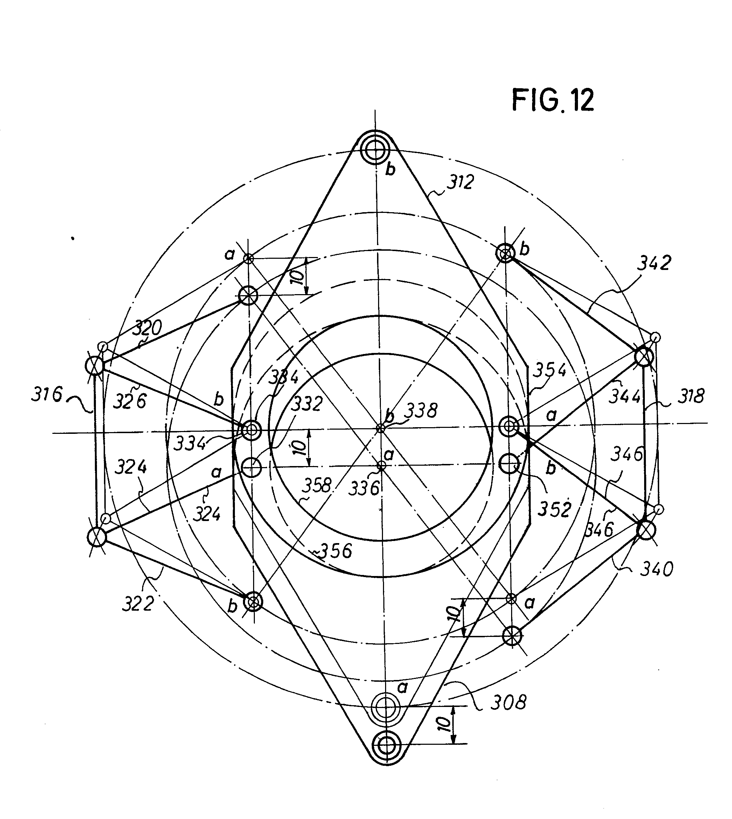

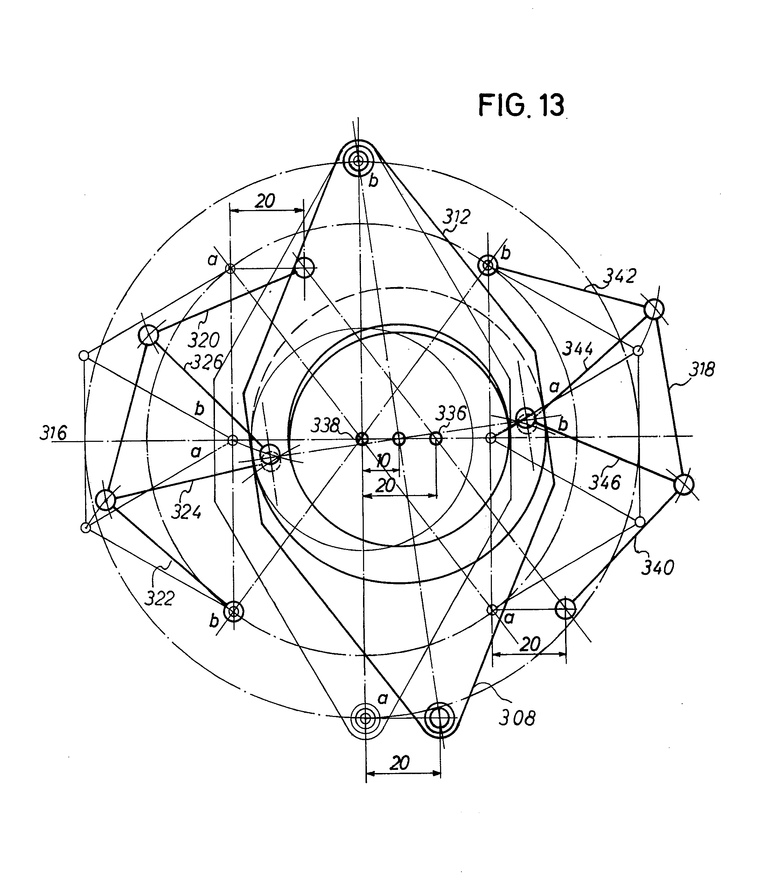

Die Figuren 12 und 13 zeigen die Verhältnisse der Kupplung bei einem Achsversatz in vertikaler bzw. in horizontaler Richtung.

Bei einem Achsversatz in vertikaler Richtung, wie in Fig. 12 dargestellt ist, bleibt auf der linken Seite die Schwenkachse 334 unverändert, während sich die Schwenkachse 332 mit dem ersten Zwischenglied 308 nach unten bewegt. Ebenso bewegt sich die Schwenkachse 360 um die gleiche Strecke nach unten. Dadurch werden die beiden von den Lenkern 320 und 326 bzw. den Lenker 322 und 324 gebildeten, ursprünglich gleichseitigen Dreiecke "spitzer", so daß der Doppellenker 316 radial nach außen bewegt wird. Auf der anderen Seite, rechts in Fig. 12 bleibt die Schwenkachse 354 unverändert, während sich die Schwenkachse 352 nach unten bewegt. Die Lenker 344 und 346 laufen dadurch in der Ansicht von Fig. 12 überkreuz, der Lenker 342 wird im Uhrzeigersinn und der Lenker 340 entgegen dem Uhrzeigersinn verschwenkt. Dadurch werden die

0013950

von den Lenkern 342,344 bzw. 340,346 gebildeten, ursprünglich gleichseitigen Dreiecke "flacher", so daß sich der Doppellenker 318 radial einwärts bewegt. Es bleibt der Lenker 342 parallel zu dem Lenker 346 und der Lenker 344 parallel zu dem Lenker 340.

Bei einem horizontalen Achsversatz zwischen den Achsen 336 und 338 erfolgt eine Schwenkbewegung der Kupplungshälften. Von den durch die Lenker gebildeten Dreiecken wird jeweils das eine etwas flacher und das andere etwas spitzer, so daß der in Fig. 13 linke Doppellenker 316 radial einwärtsbewegt und im Uhrzeigersinn verschwenkt wird, während der in Fig. 13 rechte Doppellenker radial auswärts bewegt und im gegen Uhrzeigersinn verschwenkt wird.

Die beschriebene Ausführungsform nach den Figuren 11 bis 13 hat den Vorteil, daß sich die Lenker im wesentlichen tangential zur Umlaufrichtung erstrecken, so daß die Kraftübertragung in Längsrichtung der Lenker erfolgt.

Patentansprüche

1. Kupplung zum winkeltreuen, einen Achsversatz zulassenden Kuppeln umlaufender Teile, enthaltend eine erste und eine zweite Kupplungshälfte, ein erstes und ein zweites Zwischenglied und Lenker, die mit den Kupplungshälften und den Zwischengliedern verbunden sind,

gekennzeichnet durch die Kombination der nachstehenden Merkmale:

(a)    Das erste Zwischenglied (22,120,208) ist an der ersten Kupplungshälfte (10,132,198) außerhalb der Umlaufachse (66;194) derselben um eine zu der Umlaufachse (66;194) parallele Schwenkachse (24,116,210) schwenkbar angelenkt.

(b)    Das zweite Zwischenglied (34,122;218) ist an der zweiten Kupplungshälfte (12,134;200) außerhalb der Umlaufachse (68,196) desselben und auf der der Schwenkachse (24,116;210) des ersten Zwischengliedes (22,120;208) gegenüberliegenden Seite um eine zu der Umlaufachse (68;196) parallele Schwenkachse (36,118;220) schwenkbar angelenkt.

(c)    Ein erster Doppellenker (38;124 bzw. 126;222) ist auf der einen Seite der Schwenkachsen (24,36; 116,118;210,220) der Zwischenglieder (22,34; 120,122;208,218) angeordnet und über einen ersten Lenker (40;136 bzw. 172;226) mit der ersten Kupplungshälfte (10,132;198) und über einen zweiten Lenker (42;138 bzw. 166;228) mit der zweiten Kupplungshälfte (12;134;200) sowie über einen dritten Lenker (48;142;230) mit dem ersten Zwischenglied (22;120;208) und über einen vierten Lenker
(50;144;232) mit dem zweiten Zwischenglied
(34;122;218) verbunden.

(d) Ein zweiter Doppellenker (52;128 oder
130;224) ist auf der gegenüberliegenden
Seite der Schwenkachsen (24,36;116,118;210,220)
der Zwischenglieder (22,34;120,122;208,218)
angeordnet und über einen fünften Lenker
(54;180 bzw. 182;234) mit der ersten
Kupplungshälfte (10;132;198) und über einen
sechsten Lenker (56;190 bzw. 192;236) mit
der zweiten Kupplungshälfte (12;132;200) sowie
über einen siebenten Lenker (62;238) mit
dem ersten Zwischenglied (22;120;208) und über
einen achten Lenker (64;240) mit dem zweiten
Zwischenglied (34;122;228) verbunden.

2. Kupplung nach Anspruch 1, dadurch gekennzeichnet,
daß bei fluchtenden Achsen (66,68) der beiden
Kupplungshälften (10,12) die folgenden geometrischen
Bedingungen erfüllt sind:

(e) Die Schwenkachsen (24,36), um welche
die Zwischenglieder (22,34) an den
Kupplungshälften (10,12) angelenkt sind,
liegen auf einem Zylinder (70) um die
gemeinsamen Achsen (66,68) der Kupplungshälften.

(f) Der dritte und der vierte Lenker (48,50) sind
um eine gemeinsame, zwischen dem ersten
und dem zweiten Lenker (40 bzw. 42) liegende
Schwenkachse (72) an dem ersten Doppellenker (38)
angelenkt.

24

0013950

(g) Der siebente und der achte Lenker (62 bzw. 64) sind um eine gemeinsame, zwischen dem fünften und dem sechsten Lenker (54 bzw. 56) liegende Schwenkachse (74) an dem zweiten Doppellenker (52) angelenkt.

(h) Die Schwenkachsen (74), um welche der dritte und der vierte bzw. der siebente und der achte Lenker (48,50 bzw. 62,64) an dem ersten bzw. dem zweiten Doppellenker (38,52) angelenkt sind, liegen ebenfalls auf dem besagten Zylinder (70).

(i) Die wirksamen Längen aller Lenker (40,42,48,50; 54,56,62,64) sind gleich.

(j) An den Doppellenkern (38,52) sind der dritte und der vierte bzw. der siebente und der achte Lenker (48,50 bzw. 62,64) in der Mitte zwischen den mit den Kupplungshälften (10,12) verbundenen Lenkern (40,42 bzw. 54,56) und in Abständen von diesen Lenkern angelenkt, welche der besagten wirksamen Länge der Lenker entsprechen.

3. Kupplung nach Anspruch 1, gekennzeichnet durch die nachstehenden Merkmale:

(k) Der dritte und der vierte Lenker (230,232) sind an dem ersten Doppellenker (222) um die gleichen Schwenkachsen (242,244) angelenkt wie der zweite bzw. der erste Lenker (228 bzw. 226).

(1) Der siebente und der achte Lenker (238,240) sind an dem zweiten Doppellenker (224) um die gleichen Schwenkachsen (246,248) angelenkt wie der sechste bzw. der fünfte Lenker (236 bzw. 234).

(m) Die wirksamen Längen des ersten, des zweiten, des fünften und des sechsten Lenkers (226,228, 234,236) sind gleich dem Abstand der Schwenkachsen (242,244;246,248) an den Doppellenkern (222,224).

(n) Bei fluchtenden Achsen (194,196) der beiden Kupplungshälften (198,200) fallen die Schwenkachsen (250,252) um welche der dritte und der vierte Lenker (230,232) an dem ersten bzw. zweiten Zwischenglied (208,218) angelenkt sind, zusammen und fallen ebenso die Schwenkachsen (254,256) zusammen, um welche der siebente und der achte Lenker (238,240) an dem ersten bzw. zweiten Zwischenglied (208,218) angelenkt sind.

(o) Bei fluchtenden Achsen (194,196) der beiden Kupplungshälften (198,200) sind die besagten zusammenfallenden Schwenkachsen (250,252;254, 256) des dritten und des vierten bzw. des siebenten und des achten Lenkers (230,232 bzw. 238,240) symmetrisch zu einer ersten Ebene (258) angeordnet, die durch die fluchtenden Achsen (194,196) der Kupplungshälften (198,200) und die diametral und symmetrisch dazu einander gegenüberliegenden Schwenkachsen (210,220) der Zwischenglieder (208,218) geht, und der Abstand (M) der ersteren Schwenkachsen (250,252;254,256) von dieser Ebene (258) ist halb so groß wie die Längen (L) des ersten, des zweiten, des dritten

26      0013950

und des vierten Lenkers (226,228,234, 236).

(p) Bei fluchtenden Achsen (194,196) der beiden Kupplungshälften (198,200) liegen weiterhin die Schwenkachsen (260,262), um welche der erste Lenker (226) und der fünfte Lenker (234) an der ersten Kupplungshälfte (198) angelenkt sind in einer durch die fluchtenden Achsen (194,196) der beiden Kupplungshälften (198,200) gehenden zweiten Ebene (264), und liegen die Schwenkachsen (266,268) um welche der zweite und der sechste Lenker (228,236) an der zweiten Kupplungshälfte (200) angelenkt ist, in einer dritten, durch die fluchtenden Achsen (194,196) der beiden Kupplungshälften (198,200) gehenden Ebene (270), und die zweite und die dritte Ebene (264,270) liegen symmetrisch zueinander in Bezug auf die erste Ebene (258) und schließen einen Winkel von $30^{\circ}$ ein.

4. Kupplung nach Anspruch 1, dadurch gekennzeichnet, daß auf jeder Seite der Schwenkachsen (116,118) der Zwischenglieder (120,122) zwei Doppellenker (124,126 und 128,130) angeordnet sind, die jeder über Lenker mit der ersten und der zweiten Kupplungshälfte (132,134) und dem ersten und dem zweiten Zwischenglied (120,122) verbunden sind.

5. Kupplung nach Anspruch 4, dadurch gekennzeichnet, daß an dem Ende, an welchem der eine der auf einer Seite angeordneten Doppellenker (124) über einen Lenker (136) mit der einen Kupplungshälfte (132) verbunden ist, der andere dieser Doppellenker (126) mit der jeweils anderen Kupplungshälfte (134) über einen Lenker (138) verbunden ist.

6. Kupplung nach Anspruch 5, dadurch gekennzeichnet, daß jeweils die beiden auf einer Seite angeordneten Doppellenker (124,126;128,130) in der Mitte um eine Schwenkachse (140) drehbeweglich miteinander verbunden und über ein gemeinsames Paar von Lenkern (142,144), die um diese Schwenkachse (140) schwenkbar angelenkt sind, mit dem ersten und dem zweiten Zwischenglied (120,122) verbunden sind.

7. Kupplung nach Anspruch 6, dadurch gekennzeichnet,

   daß der eine der beiden auf einer Seite angeordneten Doppellenker (126) drehbar auf einer Achse (148) gelagert ist,

   daß der andere Doppellenker (124) aus zwei Hälften (150,152) besteht, die auf verschiedenen Seiten des ersteren Doppellenkers (126) angeordnet und mit der Achse (148) starr verbunden sind,

   daß die beiden Lenker (142,144) des gemeinsamen Paares auf den beiden Enden der Achse (148) gelagert sind und

   daß die Doppellenker (124,126) an ihren Enden auf den axial äußeren Seiten in der einen Axialrichtung Lagerzapfen (162,164) für Lenker (138,166) zum Anlenken an die eine Kupplungshälfte (134) und in der entgegengesetzten Axialrichtung Lagerglieder (168,170) für Lenker (136,172) zum Anlenken an die andere Kupplungshälfte (132) aufweisen.

8. Kupplung nach einem der Ansprüche 1 bis 7, dadurch gekennzeichnet, daß elastische Mittel (90,92) zur elastischen Fesselung der Doppellenker (38,52) und Zwischenglieder (22,34) an eine

28　　　　　　0013950

Ruhelage vorgesehen sind.

9. Kupplung nach Anspruch 8, dadurch gekennzeichnet, daß die elastischen Mittel von Paaren von Zugfedern (90,92) gebildet sind, die sich zwischen dem ersten Lenker (40) und der ersten Kupplungshälfte (10) und zwischen dem zweiten Lenker (42) und der zweiten Kupplungshälfte (12) bzw. zwischen dem fünften Lenker under der ersten Kupplungshälfte und dem sechsten Lenker und der zweiten Kupplungshälfte erstrecken.

10. Kupplung nach einem der Ansprüche 1 bis 9, dadurch gekennzeichnet, daß die Doppellenker (38,52) zur Verminderung der Fliehkräfte mit Durchbrüchen (114) versehen sind (Fig. 3).

11. Kupplung nach einem der Ansprüche 1 bis 10, dadurch gekennzeichnet, daß die Zwischenglieder mit zentralen Durchbrüchen (278,280) versehen sind (Fig. 10).

12. Kupplung nach einem der Ansprüche 1 bis 11, dadurch gekennzeichnet, daß die Lenker (50,52) durch Torsionslager (94,96) an dem Doppellenker (38) angelenkt sind (Fig. 2).

13. Kupplung nach Anspruch 1, gekennzeichnet durch die nachstehenden Merkmale:

   (q)   Der dritte und der vierte Lenker (324,326) sind an dem ersten Doppellenker (316) um die gleichen Schwenkachsen (328,330) angelenkt wie der zweite bzw. der erste Lenker (322,320).

   (r)   Der siebente und der achte Lenker (344,346) sind an dem zweiten Doppellenker (318) um die gleichen Schwenkachsen (348,350) angelenkt wie der sechste bzw. der fünfte Lenker (346,344).

(s) Die wirksamen Längen aller Lenker (320,322, 324, 326,340,342,344,346) sind gleich.

(t) Bei fluchtenden Achsen (336,338) der beiden Kupplungshälften fallen die Schwenkachsen (332,334), um welche der dritte und der vierte Lenker (324,326) an dem ersten bzw. zweiten Zwischenglied (308,312) angelenkt sind, zusammen und fallen ebenso die Schwenkachsen (352,354) zusammen, um welche der siebente und der achte Lenker (344,346) an dem ersten bzw. zweiten Zwischenglied (308,312) angelenkt sind.

14. Kupplung nach Anspruch 13, dadurch gekennzeichnet, daß bei fluchtenden Achsen (336,338) der Kupplungshälften die Schwenkachsen (360,362,364,366) um welche der erste, der zweite, der fünfte und der sechste Lenker (320,322,340,342) an den Kupplungshälften angelenkt sind, auf einem Zylinder (368) um die fluchtenden Achsen (336,338) liegen und die Lenker (320,322,340,342) sich im wesentlichen tangential zu diesem Zylinder (368) erstrecken.

15. Kupplung nach Anspruch 14, dadurch gekennnzeichnet, daß die wirksamen Längen der Lenker (320,322,324, 326,340,342,344,346) gleich dem Abstand der Schwenkachsen (328,330;348,350) an den Doppellenkern sind.

16. Kupplung nach Anspruch 15, gekennzeichnet durch die nachstehenden Merkmale:

(u) Bei fluchtenden Achsen (336,338) der Kupplungshälften sind weiterhin der Abstand der Schwenkachsen (360,332) um welche der erste Lenker (320) an der ersten Kupplungshälfte und der dritte Lenker (324) an dem ersten Zwischenglied (308) angelenkt ist und der Abstand der Schwenkachsen (362,334) um welche der zweite Lenker (322) an der zweiten Kupplungshälfte und der vierte Lenker (326) an dem zweiten Zwischenglied (312) angelenkt ist, sowie der Abstand der Schwenkachsen, (364,352) um welche der fünfte Lenker an der ersten Kupplungshälfte und der siebente Lenker (344) an dem ersten Zwischenglied (308) angelenkt ist und der Abstand der Schwenkachsen (366,354), um welche der sechste Lenker (342) an der zweiten Kupplungshälfte und der achte Lenker (346) an dem zweiten Zwischenglied (312) angelenkt sind, gleich der wirksamen Länge der Lenker (320...).

(v) Die Doppellenker (316,318) liegen auf diametral gegenüberliegenden Seiten tangential zu einem Kreis (370) um die fluchtenden Achsen (336,338) der Kupplungshälften, der durch die Schwenkachsen (310,314) geht, um welche die Zwischenglieder (308,312) an den Kupplungshälften angelenkt sind.

FIG. 1

FIG. 2

FIG. 3

FIG. 4

FIG. 5

FIG. 6A

FIG. 6

a     b

168

162

150     156

124     126

144

160

146     158

148

142

140

152

154

a     b

170     164

138

186

134

190

20

136

118

176

122

180

124,126

184

128,130

144

b     b

20

a     a

142

140

174

120

188    192

166

116

178

172

182

20

132

D

5/12

0013950

FIG. 7

FIG. 8

FIG. 9

FIG. 10

FIG. 11

FIG.12

FIG. 13

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | FR - A - 732 466 (CONSTRUCTIONS ELECTRIQUES) <br> * Ganzes Dokument * <br><br> -- | 1 | F 16 D 3/60 <br> 3/04 |
| | US - A - 1 901 843 (GORDON) <br> * Ganzes Dokument * <br><br> -- | 1 | |
| | FR - A - 1 042 657 (METALASTIK) <br> * Ganzes Dokument * <br><br> -- | 1,8 | |
| | | | RECHERCHIERTE SACHGEBIETE (Int. Cl. 3) |
| | BE - A - 430 952 (S.A. COCKERILL) <br> * Ganzes Dokument * <br><br> -- | 1 | F 16 D 3/00 <br> F 16 H 21/00 |
| P | FR - A - 2 398 217 (SCHWEIZERISCHE LOKOMOTIV)(Veröffentlicht am 16.02.1979) <br> * Ganzes Dokument * <br><br> -- | | |
| A | US - A - 2 086 549 (HARRIS) | | |
| A | US - A - 4 084 411 (MAYFIELD) | | KATEGORIE DER GENANNTEN DOKUMENTE |
| A | US - A - 2 024 474 (PERRY) | | X: von besonderer Bedeutung |
| A | US - A - 1 728 297 (MARTI) | | A: technologischer Hintergrund <br> O: nichtschriftliche Offenbarung |
| A | GB - A - 581 854 (TEAGLE) <br><br> ----- | | P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |
| | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 28-04-1980 | BALDWIN |

EPA form 1503.1 06.78